# EUROPÄISCHE PATENTANMELDUNG

(11) **EP 1 544 873 A2**
(43) Veröffentlichungstag der Anmeldung: **22.06.2005**
(21) Anmeldenummer: 04106400.7
(22) Anmeldetag: 08.12.2004
(51) Int. Cl.: H01F 6/04

(54) **Kühleinrichtung für einen Supraleiter**

(30) Priorität: 19.12.2003 DE 10359980
(71) Anmelder: Siemens Aktiengesellschaft, 80333 München (DE)
(72) Erfinder: Ahlf, Gerd, 91369, Wiesenthau (DE); Krämer, Hans-Peter, 91058, Erlangen (DE); Wacker, Bernd, 91074, Herzogenaurach (DE)

(57) **Zusammenfassung**

Eine Kühleinrichtung (1) für einen Supraleiter (4) mit einem Kryostaten (10) mit einem Innenraum (15), in dem ein Kältemittel mit niedriger, insbesondere kryogener Temperatur, z.B. von 77K, ein Kryobad (5) für den Supraleiter (4) ausbildet weist erfindungsgemäß eine Aufnahmevorrichtung (11) zur Halterung des Kryostaten (10) und zumindest ein den Kryostaten (10) und die Aufnahmevorrichtung (11) verbindendes Halterungselement (19) auf, wobei das zumindest eine Halterungselement (19) ein eine Bewegungsübertragung von der Aufnahmevorrichtung (11) auf den Kryostaten (10) dämpfendes Element (18) umfasst.

Die Kühleinrichtung gewährleistet die Kühlung des Supraleiters auch unter Schock- und Vibrationseinwirkungen und eignet sich deshalb insbesondere zur Kühlung von Supraleitern in elektrischen Apparaten und Maschinen in mobilen Einrichtungen wie z.B. Über- und Unterwasserschiffen.

## Beschreibung

Die Erfindung bezieht sich auf eine Kühleinrichtung für einen Supraleiter, mit einem Kryostaten mit einem Innenraum, in dem ein Kältemittel mit niedriger, insbesondere kryogener Temperatur, z.B. von 77K, ein Kryobad für den Supraleiter ausbildet.

Supraleiter finden im Rahmen elektrischer Apparate wie z.B. supraleitender Strombegrenzer oder elektrischer Maschinen wie z.B. Transformatoren, Motoren, Generatoren und elektrischer Magnete mit supraleitender Wicklung zunehmend Einzug in die betriebliche Praxis.

Die Kühlung des Supraleiters in einer solchen elektrischen Einrichtung erfolgt meist mit Hilfe eines Kryostaten, der einen Innenraum aufweist, in dem ein Kältemittel mit niedriger, insbesondere kryogener Temperatur, z.B. von 77K, ein Kryobad für den Supraleiter ausbildet. Eine Kühleinrichtung mit einem derartigen Kryostaten ist z.B. aus der WO 02/14736 A1 bekannt.

In der betrieblichen Praxis kann ein solcher Kryostat Schockund Vibrationsbelastungen, verschiedenen wechselnden Umgebungsbedingungen wie Druckschwankungen sowie Lageveränderungen ausgesetzt sein. Dies gilt insbesondere für Kryostate, die in mobilen Einrichtungen wie z.B. in Über- und Unterwasserschiffen eingesetzt werden. So können z.B. Antriebskomponenten der mobilen Einrichtung Vibrationen erzeugen oder die mobile Einrichtung kann aufgrund äußerer Einwirkungen Schockbelastungen ausgesetzt sein. In Abhängigkeit von der Art, Dauer und Höhe der Vibrationen bzw. des Schocks kann dies zu Beschädigungen bis hin zum Ausfall des Kryostaten, damit auch zum Ausfall der Kühlung des Supraleiters und schließlich zum Ausfall des elektrischen Apparates oder der elektrischen Maschine führen.

Es ist deshalb Aufgabe vorliegender Erfindung, eine Kühleinrichtung mit einem eingangs erwähnten Kryostaten zu schaffen, bei der die Kühlung des Supraleiters auch unter dem Einfluss von Vibrationen und Schocks auf den Kryostaten gewährleistet ist, und die somit insbesondere für den Einsatz in mobilen Einrichtungen, und hierbei insbesondere in Über- und Unterwasserschiffen, geeignet ist.

Die Lösung dieser Aufgabe gelingt erfindungsgemäß durch die Lehre des Patentanspruchs 1. Eine elektrische Einrichtung mit einer derartigen Kühlvorrichtung ist Gegenstand des Patentanspruchs 26. Eine Aufnahmevorrichtung zur Halterung des Kryostaten ist Gegenstand des Patentanspruchs 27. Ein Kryostat zum Einbau in eine solche Aufnahmevorrichtung ist Gegenstand des Patentanspruchs 28. Vorteilhafte Ausgestaltungen der Erfindung sind jeweils Gegenstand der Unteransprüche.

Die Kühleinrichtung weist erfindungsgemäß eine Aufnahmevorrichtung zur Halterung des Kryostaten und zumindest ein den Kryostaten und die Aufnahmevorrichtung verbindendes Halterungselement auf. Das zumindest eine Halterungselement umfasst hierbei ein eine Bewegungsübertragung von der Aufnahmevorrichtung auf den Kryostaten dämpfendes Element.

Die Aufnahmevorrichtung kann hierbei Teil einer elektrischen Einrichtung (z.B. eines elektrischer Apparates oder einer elektrischen Maschine) sein. Sie kann aber auch Teil einer diese elektrische Einrichtung aufnehmenden Einrichtung, im Fall eines Über- oder Unterwasserschiffes z.B. des Schiffsrumpfes sein. Der Kryostat kann somit mittels des Halterungselementes und der Aufnahmevorrichtung in diesen Einrichtungen befestigt werden.

Durch das zumindest eine dämpfende Element können auf die Aufnahmevorrichtung einwirkende und über das zumindest eine Halterungselement auf den Kryostaten einwirkende Schock und/oder Vibrationen gedämpft und somit die Schock- und Vibrationsbelastung des Kryostaten erniedrigt werden. Aufgrund der dadurch möglichen weichen und flexiblen Halterung des Kryostaten kann der innere Aufbau des Kryostaten konstruktiv einfach gehalten werden, z.B. eher steif aufgebaut werden, und es können z.B. Standardkryostate verwendet werden. Insbesondere die inneren Bauteile, welche auf einem sehr kalten Temperaturniveau von z. B. 77K liegen, unterliegen dem physikalischen Effekt der Kaltversprödung. Diese Kaltversprödung tritt bei den meisten metallischen Werkstoffen mehr oder weniger auf, so dass innere Maßnahmen zur Schockdämpfung nur ganz bedingt tauglich sind. Da die Anforderungen an den Kryostaten bei äußerer Schocklagerung hinsichtlich Schock- und Vibrationsfestigkeit geringer sind, müssen diesbezüglich keine besonderen Maßnahmen getroffen werden und der Kryostat kann - ohne dass Rücksicht auf solche Massnahmen getroffen werden muss - z.B. auf geringe Wärmeverluste und/oder optimale Kühlungseigenschaften ausgelegt werden. Der Kryostat kann z.B. aus amagnetischem Edelstahl gefertigt werden, der sich besonders für den Einsatz bei kryogenen Temperaturen eignet. Als dämpfendes Element kann bevorzugt ein Gummidämpfer oder ein Federelement vorgesehen werden.

Unter Schock- und/oder Vibrationseinwirkung auftretende Lageveränderungen des Kryostaten in Bezug auf die Stromzuführungen zu dem Kryostaten können dadurch ausgeglichen werden, dass die Stromzuführungen zu dem Kryostaten bewegungsflexibel ausgeführt sind oder Bewegungskompensatoren aufweisen.

Gemäß einer vorteilhaften Ausgestaltung der Erfindung weist der Kryostat einen Außenbehälter und einen den Innenraum begrenzenden und in dem Außenbehälter angeordneten Innenbehälter auf, wobei der Außenbehälter aus einem amagnetischen Stahl und der Innenbehälter aus einem nichtleitenden Material, insbesondere glasfaserverstärktem Kunststoff, besteht. Durch den Innenbehälter aus einem nichtleitenden Material kann bei einer Schockeinwirkung auf den Kryostaten, die zu einer Verschiebung oder Zerstörung des inneren Aufbaus des Kryostaten führen kann, ein Erdschluss zwischen dem supraleitenen Material und dem (Außen-) Behälter des Kryostaten vermieden werden. Der Außenbehälter kann somit aus dem besonders für kryogene Temperaturene geeigneten amagnetischen Stahl bestehen und trotzdem die Gefahr eines Erdschlusses vermieden werden.

Wenn ein den Innenraum des Kryostaten begrenzender Innenbehälter aus einem leitenden Material, insbesondere einem amagnetischen Material, besteht, kann ein Erdschluss zwischen dem Innenbehälter und dem Supraleiter dadurch vermieden werden, dass ein Trennelement aus einem nichtleitenden Material, insbesondere einem glasfaserverstärkten Kunststoff, zwischen dem Innenbehälter und dem Supraleiter angeordnet ist.

Die Kühlung des Supraleiters bei starken Schockeinwirkungen kann alternativ oder zusätzlich auch dadurch gewährleistet werden, dass bei einer Normallage des Kryostaten das Kryobad, d.h. der mit flüssigem Kältemittel gefüllte Teil des Innenraumes des Kryostaten, eine größere Höhe als Breite aufweist.

Bei starker seitlicher Schockeinwirkung schwappt an der von der Schockeinwirkung betroffenen Innenwand des Kryostaten flüssiges Kältemittel entlang der Innenwand des Kryostaten in den oberen, mit gasförmigem Kältemittel gefüllten Teil des Innenraumes des Kryostaten, d.h. der Flüssigkeitspegel wird in diesem Bereich angehoben. An der dieser Innenwand im Innenraum gegenüberliegenden Innenwand senkt sich dagegen der Flüssigkeitspegel entsprechend ab. Es liegt somit ein unterschiedlich hoher Flüssigkeitspegel in unterschiedlichen Bereichen des Kryostaten vor. Ein entsprechender Effekt tritt auch bei einer Neigung bzw. Schräglage des Kryostaten auf, was z.B. bei Trimm, Krängung und Stampfen im Schiffsbetrieb zu berücksichtigen ist.

In dem Bereich mit gesenktem Flüssigkeitspegel befindet sich möglicherweise ein Teil der supraleitenden Elemente oberhalb des Flüssigkeitspegels des Kryobades und wird nicht genügend gekühlt. Außerdem steigen die Kryostat-Verluste, da wärmere Bereiche am oberen Kryostatrand mit Kältemitel benetzt werden. Schlanke Kryostate, d.h. Kryostate, deren Kryobad eine größere Höhe als Breite aufweist, sind unempfindlicher gegen Stöße oder Schräglagen des Kryostaten, da in diesen Fällen die Differenz zwischen gesenktem und erhöhtem Flüssigkeitspegel im Innenraum des Kryostaten kleiner ist als im Fall eines Kryostaten, dessen Kryobad eine größere Breite als Höhe aufweist.

Ein Kryostat, bei dem bei einer Normallage des Kryostaten das Kryobad eine größere Höhe als Breite aufweist, eignet sich somit insbesondere für den Einsatz in mobilen Einrichtungen, da es in solchen Einrichtungen aufgrund der Bewegung der Einrichtung zu Beschleunigungen und Lageveränderungen (insbesondere Schräglagen) des Kryostaten kommen kann. Bei Über- und Unterwasserschiffen liegen solche Situationen z.B. bei Krängung und Neigung des Schiffes vor.

Ein Austritt eines Teils des Supraleiters aus dem Kryobad verbunden mit einer ungenügende Kühlung dieses Teils des Supraleiters im Fall starker Schockbelastungen oder Schräglagen des Kryostaten kann zusätzlich oder alternativ auch dadurch verhindert werden, dass der Kryostat zumindest ein Prallelement aufweist, das verhindert, dass bei Schockbelastung oder Neigung des Kryostaten aus seiner Normallage das Kryobad seine Lage derart verändert, dass sich der Supraleiter außerhalb des Kryobades befindet.

Unter einem Prallelement wird hierbei ein Element verstanden, welches zumindest teilweise flüssigkeitsundurchlässig ist.

Eine Ausbreitung auf das Prallelement treffender Flüssigkeit über das Prallelement hinaus wird hierdurch verhindert, begrenzt oder teilweise verzögert. Ein Durchlass von Flüssigkeit wird z.B. durch ein Blech oder einer Platte verhindert. Auf das Blech oder die Platte treffende Flüssigkeit prallt an dem Blech bzw. der Platte ab. Ein teilweiser Durchlass von Flüssigkeit kann z.B. durch ein Lochblech erzielt werden. Hier "prallt" nur ein Teil der Flüssigkeit zurück, der andere Teil kann durch die Löcher durchtreten.

Gemäß einer konstruktiv besonders einfachen Ausgestaltung der Erfindung ist das zumindest eine Prallelement (bei Normallage des Kryostaten) oberhalb des Flüssigkeitspegels des Kryobades angeordnet und verläuft von einer den Innenraum seitlich begrenzenden Innenwand in Richtung Mitte des Innenraums.

Bei einem seitlich auf den Kryostaten einwirkenden Schock schwappt die Flüssigkeit auf der Seite des Innenraums, an der der Schock einwirkt, nach oben, während sie an der gegenüberliegenen Seite absinkt, so dass möglicherweise Teile des Supraleiters nicht mehr von Flüssigkeit bedeckt werden. Die hochschwappende Flüssigkeit prallt jedoch gegen das Prallelement, so dass ein weiteres Hochschwappen der Flüssigkeit verbunden mit einer einhergehenden weiteren Absenkung des Flüssigkeitspegels auf der gegenüberliegenden Seite des Innenraumes des Kryostaten verhindert wird. Der Supraleiter wird somit auch unter Schockeinwirkung stets im flüssigen Kryobad verbleiben. Entsprechend kann das Prallelement auch ein wesentliches Absinken des Flüssigkeitspegels im Fall einer Schräglage oder einer Beschleunigung des Kryostaten verhindern. Auch diese Ausgestaltung des Kryostaten eignet sich somit insbesondere für dessen Einsatz in mobilen Einrichtungen, da es in solchen Einrichtungen aufgrund der Bewegung der Einrichtung zu Beschleunigungen und Lageveränderungen (insbesondere Schräglagen) des Kryostaten kommt. Besonders geeignet ist diese Ausgestaltung des Kryostaten hierbei für Über- und Unterwasserschiffe, in denen es aufgrund von Krängung und Neigung des Schiffes zu Schräglagen des Kryostaten kommen kann.

Das zumindest eine Prallelement weist bevorzugt in seinem Verlauf von der Innenwand zu der Mitte des Innenraumes einen zu dem Flüssigkeitspegel abnehmenden Abstand auf. Flüssiges Kältemittel, das bei Schock- oder Vibrationseinwirkung über das Prallelement schwappt, kann somit wieder in das Kryobad zurückfliesen.

Gemäß einer konstruktiv besonders einfachen Ausgestaltung der Erfindung verläuft das zumindest eine Prallelement bis zu einer bezüglich des Innenraumes gegenüberliegenden Innenwand und teilt somit den Innenraum in einen unteren, im wesentlichen flüssiges Kältemittel aufweisenden Teil und einen oberen, nur gasförmiges Kältemittel aufweisenden Teil, wobei das Prallelement zumindest ein im Wesentlichen in der Mitte des Innenraumes angeordnetes Durchgangsloch für einen Gas- und Flüssigkeitsaustausch zwischen dem unteren und dem oberen Teil aufweist.

Funktionsbeeinträchtigungen des Kryostaten im Fall von Druckschwankungen in der Umgebung des Kryostaten können dadurch vermieden werden, dass der Kryostat in einem gasdichten Druckbehälter angeordnet ist. Der zwischen der Außenwand des Kryostaten und der Innenwand des Druckbehälters befindliche Raum kann dann mit gasförmigem Kältemittel gefüllt und auf Überdruck gegenüber dem Innenraum des Kryostaten gehalten werden. Im Falle eines Lecks des Kryostaten dringt sauberes Kältemittel in den Innenraum des Kryostaten ein, wird kondensiert und der Pegel des flüssigen Kältemittels in dem Kryostaten steigt langsam an. Bei Erreichen eines definierten maximalen Pegels kann die Notwendigkeit eines Wartungs- oder Reparaturzugriffes signalisiert werden. Alternativ kann der Raum auch auf Unterdruck gegenüber dem Innenraum des Kryostaten gehalten werden. Im Fall eines Lecks im Kryostaten dringt Kältemittel von dem Kryostaten in den Raum zwischen Kryostat und Innenwand des Druckbehälters ein und der Pegel des flüssigen Kältemittels in dem Innenraum sinkt ab. Bei Unterschreiten eines definierten minimalen Pegels kann die Notwendigkeit eines Wartungs- oder Reparaturzugriffes signalisiert werden.

Im Ergebnis kann somit ein Eindringen von Umgebungsluft in den Kryostaten im Fall einer Undichtigkeit des Kryostaten verhindert werden, wenn die Umgebung des Kryostaten einen im Vergleich zum Innenraum des Kryostaten höheren Druck aufweist. Die Umgebungsluft würde im Inneren des Kryostaten ausfrieren, bis der Druck ausgeglichen wird. Dieser Fall kann insbesondere auftreten, wenn sich der Kryostat in einem Raum mit wechselnden Druckverhältnissen befindet. Solche Räume liegen z.B. in Unterwasserschiffen vor.

Statt einer Anordnung des gesamten Kryostaten in einem gasdichten Druckbehälter kann auch an einer Außenwand des Kryostaten ein druckfestes und gasdichtes Wandelement derart angeordnet sein, dass zwischen der Außenwand und dem Wandelement eine gasbefüllbarer Druckraum ausgebildet wird. Der Druckraum kann dann mit gasförmigem Kältemittel gefüllt und auf Überdruck gegenüber dem Innenraum des Kryostaten gehalten werden, so dass im Bereich des Wandelementes ein Eindringen von Umgebungsluft in den Kryostaten bei einem Leck des Kryostaten verhindert wird, wenn die Umgebung des Kryostaten einen im Vergleich zum Innenraum des Kryostaten höheren Druck aufweist. Alternativ kann der Druckraum auch auf Unterdruck gegenüber dem Innenraum gehalten werden.

Bevorzugt ist das Wandelement im Bereich eines einen Zugriff in den Innenraum des Kryostaten erlaubenden Deckels angeordnet, da solche Deckel nur sehr schwierig vakuumdicht ausgeführt werden können.

Eine erfindungsgemäße Aufnahmevorrichtung für einen Kryostaten weist zumindest ein Halterungselement zur Halterung des Kryostaten auf, wobei das zumindest eine Halterungselement ein eine Bewegungsübertragung von der Aufnahmevorrichtung auf den Kryostaten dämpfendes Element umfasst.

Es liegt im Rahmen der Erfindung, dass der Kryostat und das zumindest eine Halterungselement im Sinne einer Vormontage-Einheit zusammengefügt werden. Auf diese Weise kann eine schnelle und einfache Befestigung des Kryostaten an der Aufnahmevorrichtung erfolgen, was insbesondere unter beengten Platzverhältnissen, wie sie z.B. an Bord von Schiffen vorliegen, von Bedeutung ist.

Weitere Vorteile der Erfindung, nähere Einzelheiten sowie vorteilhafte Ausgestaltungen der Erfindung sind aus den Zeichnungen und der Zeichnungsbeschreibung zu entnehmen.

Im einzelnen zeigen in beispielhafter Ausführung und in vereinfachter, prinzipieller Darstellung im Schnitt:
- FIG 1:: eine Kryostaten mit elastischen Elementen zur Verbesserung der Schockfestigkeit
- FIG 2:: einen Kryostaten in Normallage und in Schräglage
- FIG 3:: einen Kryostaten mit einer Prallblende für flüssiges Kältemittel in Normallage und in Schräglage
- FIG 4:: einen Kryostaten mit Stromzuführungstöpfen in Normallage
- FIG 5:: eine vereinfachte Darstellung des Kryostaten von FIG 4 in Normallage
- FIG 6:: den Kryostaten von FIG 5 in Schräglage
- FIG 7:: einen Kryostaten mit verbessertem Verhalten bei wechselnden Umgebungsdruckverhältnissen

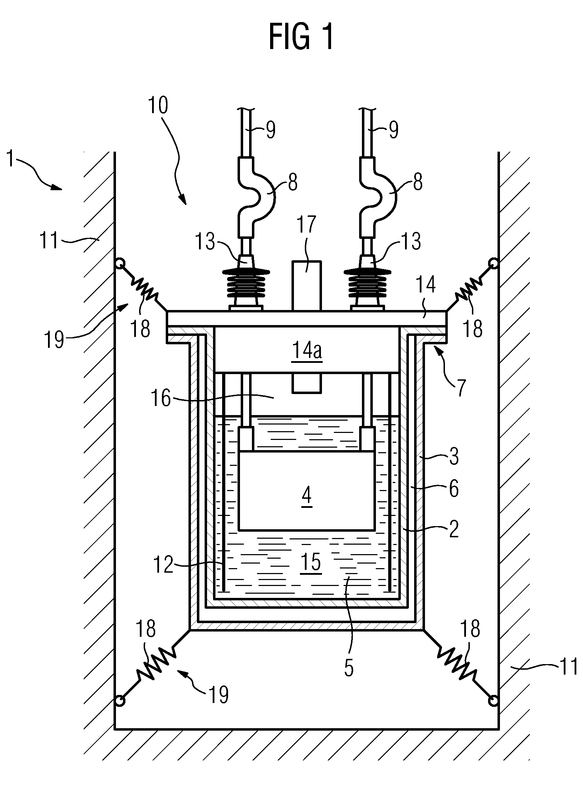

Figur 1 zeigt eine Kühleinrichtung 1 mit einem Kryostaten 10 zu Kühlung eines Hochtemperatur-Supraleiter (HTS-) Strombegrenzers. Der Kryostat 10 weist einen Aussenbehälter 3 und einen in dem Aussenbehälter 3 angeordneten Innenbehälter 2 auf. Durch den Innenbehälter 2 wird ein Innenraum 15 ausgebildet, in dem ein Kältemittel mit niedriger, insbesondere kryogener Temperatur, z.B. von 77K, ein Kryobad 5 für den supraleitenden Strombegrenzer 4 ausbildet. Beide Behälter 2 und 3 sind aus einem amagnetischen Stahl gefertigt und weisen jeweils einen Flansch 7 auf, über den sie miteinander und mit einem Deckel 14 des Kryostaten 1 verbunden sind. Zwischen dem Deckel 14 und dem Kryobad 6 mit flüssigem Kältemittel befindet sich ein Dampfraum 16 mit gasförmigem Kältemittel. An seiner dem Dampfraum 16 zugewandten Seite weist der Deckel 14 eine thermische Isolation 14a auf, die z.B. aus Styrofoam besteht. Der Kryostat 10 weist ferner einen Kaltkopf 17 zur Rekondensation von gasförmigem Kältemittel auf.

Der innere Behälter 2 ist außen mit einer nicht näher dargestellten Wärmeisolationsfolie (Mylar) umwickelt. Zwischen den beiden Behältern 2,3 befindet sich ein Hohlraum 6, welcher mittels eines nicht dargestellten Ventils im Aussenbehälter 3 abgepumpt werden kann, so dass ein Vakuum hoher Güte erzeugt werden kann.

Die Wärmeisolation des Kryostaten 10 hängt von der Güte des Vakuums, der Anzahl der Lagen an Isolationsfolie sowie der Wandstärke der Behälter 2,3 ab. Um eine möglichst gute Wärmeeisolation zu erhalten, muss die Wandstärke des Kryostaten dünn sein und das Vakuum sehr gut sein (besser als 10⁻⁴ bar).

Beim Kryostatbau widersprechen sich die Anforderungen nach hoher mechanischer Stabilität und nach niedrigen Verlusten. Typischerweise ist der Innenbehälter 2 nur am oberen Flansch 7 befestigt und seine Wandstärke möglichst dünn, um die eingeleitete Wärmemenge klein zu halten. Grundsätzlich gilt: je stabiler der Kryostat, desto höher die Verluste. Wenn man höhere Verluste in Kauf nehmen kann, kann ein stabilerer Kryostat durch eine größere Wandstärke des Innenbehälters 2 und eine Abstützung des Innenbehälters 2 gegen den Außenbehälter 3 ermöglicht werden. Die hierfür benötigten Abstützelemente im Zwischenraum von innerem und äußerem Behälter 2 bzw. 3 bilden Wärmebrücken, welche dem Gesamtaufbau zusätzliche thermische Verluste durch Wärmeleitung aufbürden.

Eine Aufnahmevorrichtung 11 dient zur Befestigung und Halterung des Kryostaten 10 in einer nicht näher dargestellten Einrichtung. Die Aufnahmevorrichtung 11 kann z.B. Teil einer mobilen Einrichtung wie eines Fahrzeuges, insbesondere eines Über- oder Unterwasserfahrzeuges oder Teil einer elektrischen Maschine oder eines elektrischen Apparates sein.

Das Gehäuse des Kryostaten 10, im Ausführungsbeispiel gemäß Figur 1 der Außenbehälter 3, ist über Halterungselemente 19 mit der Aufnahmevorrichtung 11 verbunden, wobei die Halterungselemente 19 jeweils ein eine Bewegungsübertragung von der Aufnahmevorrichtung 11 auf den Kryostaten 10 dämpfendes Element 18 umfassen. Die dämpfenden Elemente 18 sind im Ausführungsbeispiel als Federelemente ausgebildet. Durch die dämpfenden Elemente 18 werden Bewegungsübertragungen von der Aufnahmevorrichtung 11 auf den Kryostaten 10 und somit Schock- und/oder Vibrationseinwirkungen auf den Kryostaten 1 reduziert.

Die außerhalb des Kryostaten 10 angeordneten Stromzuführungen 13 sind flexibel über Rohrkompensatoren 8 an eine Sammelschiene 9 angebunden. Statt der Rohrkompensatoren 8 können auch Cu-Geflecht-Bänder oder biegsame Cu-Blechbänder verwendet werden.

Falls bei einer Schockbeanspruchung Teile des inneren Aufbaus des Kryostaten verschoben oder zerstört werden, kann ein höchst unerwünschter Erdschluss zwischen dem Strombegrenzerelement 4 und der Innenwand des Kryostaten 10 entstehen. Ein solcher Erdschluss kann dadurch vermieden werden, dass der Innenbehälter 2 aus einem nichtleitenden Material, insbesondere einem glasfaserverstärktem Kunststoff besteht. Der Außenbehälter 3 kann dann weiterhin aus amagnetischem Stahl bestehen.

Zusätzlich oder alternativ kann zwischen dem Supraleiter und der Innenwand ein Trennelement 12 aus einem nichtleitenden Material, insbesondere aus einem glasfaserverstärktem Kunststoff, angeordnet werden. Im Fall eines zylindrischen Kryostaten kann diese Trennelement konstruktiv einfach als ein Rohr ausgebildet sein. Zur weiteren Erhöhung der Schock- und Vibrationsfestigkeit kann der Supraleiter 4 über nicht näher dargestellte Abstandshalter an dem Trennelement 12 abgestützt sein.

Ein Erdschluss kann weiterhin auch dadurch vermieden werden, dass der gesamte Kryostat aus Kunststoff gefertigt ist, d. h. beide Behälter 2,3 bestehen aus einem Kunststoff, insbesondere einem glasfaserverstärkten Kunststoff.

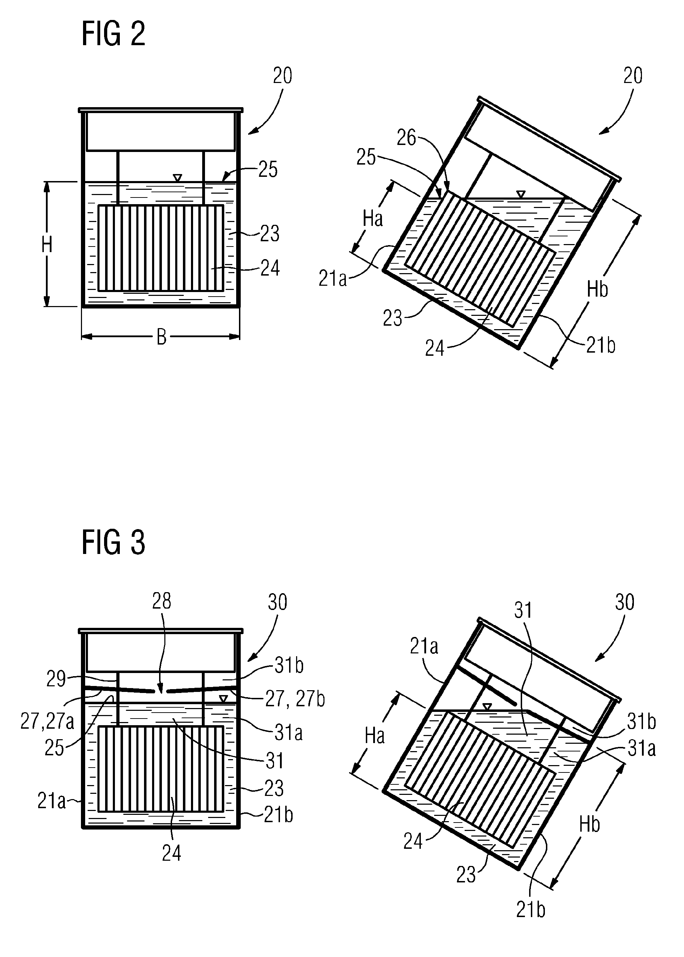

FIG 2 zeigt einen Kryostaten 20 zur Kühlung eines HTS-Strombegrenzerelementes 24 zum einen in Normallage und zum anderen in Schräglage. In Normallage des Kryostaten 20 weist das Kryobad 23 über seine gesamte Breite B eine Höhe H auf.
Bei starker Schräglage (oder äquivalent: starker Beschleunigung wie z.B. im Falle einer Schockeinwirkung auf die Innenwand 21b des Kryostaten) steigt der Pegel des Kryobades 23 an der mit 21b bezeichneten Innenwand des Kryostaten 20 auf eine Höhe Hb, während er an der mit 21a bezeichneten Innenwand des Kryostaten 20 auf eine Höhe Ha fällt. Es befindet sich somit ein mit 26 bezeichneter Teil des HTS-Strombegrenzerelementes 24 oberhalb des Flüssigkeitspegels 25 des Kryobades 23 und wird nicht genügend gekühlt. Außerdem steigen die Kryostat-Verluste, da wärmere Bereiche am oberen Kryostatrand mit Kältemittel benetzt werden.

Dieses Problem kann zum einen dadurch gelöst werden, dass bei Normallage des Kryostaten das Kryobad eine größere Höhe H als Breite B aufweist. Je grösser das Verhältnis zwischen Höhe H und Breite B ist, umso weniger ist bei starker Schräglage (oder äquivalent: starker Beschleunigung wie z.B. im Falle einer Schockeinwirkung) die Differenz zischen dem maximalen Pegel Hb und dem minimalen Pegel Ha und umso geringer ist die Gefahr, dass ein Teil des HTS-Strombegrenzerelementes 24 oberhalb des Flüssigkeitspegels 25 des Kryobades 23 liegt.

FIG 3 zeigt einen Kryostaten 30 in Normallage und Schräglage, bei dem der Austritt eines Teils der supraleitenden Elemente 24 aus dem Kryobad 23 bei Schräglage des Kryostaten 30 oder äquivalent starker Beschleunigung des Kryostaten 30 dadurch verhindert wird, dass der Kryostat Prallelemente 27a,27b aufweist, die verhindern, dass bei Schockbelastung des Kryostaten oder Neigung des Kryostaten aus seiner Normallage das Kryobad seine Lage derart verändert, dass sich der Supraleiter des HTS-Strombegrenzerelementes 24 außerhalb des Kryobades 23 befindet.

Die Prallelemente 27a,27 sind hierzu im Innenraum 31 des Kryostaten oberhalb des Flüssigkeitspegels 25 des Kryobades 23 angeordnet und verlaufen von einer den Innenraum 31 seitlich begrenzenden Innenwand 21a bzw. 21b in Richtung Mitte des Innenraums 31. Die Prallelemente 27a,27b können z.B. jeweils als Prallbleche ausgeführt sein.

In einer Konstruktiv besonders einfachen Ausführung sind die Prallelemente 27a,27b Teil eines einzigen, von der Innenwand 21a zu der Innenwand 21b verlaufenden Prallelementes 27, welches den Innenraum 31 des Kryostaten in einen unteren, im wesentlichen flüssiges Kältemittel aufweisenden Teil 31a und einen oberen, mit gasförmigem Kältemittel gefüllten Teil 31b teilt. Über ein in dem Prallelement 27 im wesentlichen in der Mitte des Innenraumes 31 angeordnetes Durchgangsloch 28 ist ein Gas- und Flüssigkeitsaustausch zwischen dem unteren Teil 31a und dem oberen Teil 31b möglich.

Bei starker Schräglage (oder äquivalent: starker Beschleunigung wie z.B. im Falle einer Schockeinwirkung) wird durch die Prallelemente 27a, 27b bzw. das Prallelement 27 die Ausbreitung des flüssigen Kältemittels entlang der Innenwände des Kroytasten verhindert. Somit kann die Differenz zischen dem maximalen Pegel Hb und dem minimalen Pegel Ha des Kryobades klein gehalten und verhindert werden, dass ein Teil des HTS-Strombegrenzerelementes 24 oberhalb des Flüssigkeitspegels 25 des Kryobades 23 zum Liegen kommt.

Das Prallelement 27 kann z.B. blendenförmig ausgebildet sein. Bevorzugt sind die Prallelement 27a und 27b bzw. das Prallelement 27 zur Mitte des Innenraums 31 hin in Richtung zum Flüssigkeitspegel 25 geneigt. Das Prallelement 27 weist somit bevorzugt eine Trichterform auf.

In Normalstellung (d.h. senkrechter Stellung) des Kryostaten weist der Rand des Durchgangsloches 28 den geringsten Abstand zum Flüssigkeitspegel 25 des Kryostaten 30 auf. Hierdurch kann über die Prallelemente 27a, 27b bzw. 27 geschwapptes flüssiges Kältemittel wieder in das Kryobad 23 zurückfließen.

Ein blendenförmiges Prallelement kann auch mehrstufig sein, d. h., mehrere übereinander und zusätzlich treppenförmige Blendenelemente aufweisen. Der Durchmesser des Loches 28 kann so groß sein, dass die Stromzuführungen 29 durchgeführt werden können.

Bevorzugt bestehen die Prallelemente 27a, 27b bzw. 27 aus einem nichtleitenden Material. Es können somit nicht isolierte Stromzuführungen 29 hindurchgeführt werden. Weiterhin sollten sie aus nicht leitendem Material sein, wenn sie dicht mit einem inneren Behälter des Kryostaten 30 abschliessen sollen.

Unter nicht leitendem Material soll hierbei ein solches Material verstanden werden, das sowohl geringe thermische Leitfähigkeit aufweist, wie z. B. Keramik, Kunststoff, verstärkte Stoffe (z. B. Glasfaser verstärkt) als auch geringe elektrische Leitfähigkeit aufweist, um einen elektrischen Überschlag zwischen Leiter und Erde oder Leiter und Leiter mit der Folge eines Erd- oder Kurzschlusses zu vermeiden. Dies ist insofern von Bedeutung, da Kryostate aufgrund der Forderung nach magnetischer Neutralität bevorzugt aus amagnetischen Edelstahl gefertigt sind und somit die Gefahr eines Erdschlusses zwischen dem Supraleiter und dem Kryostaten gegeben ist.

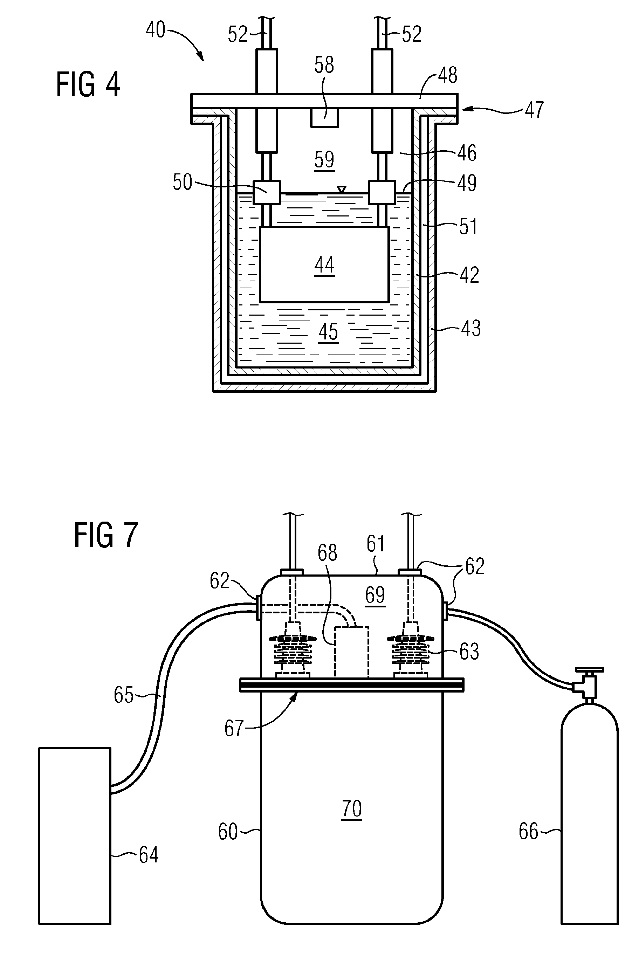

Weiterhin ist es wichtig, dass sich im Inneren eines Kryostaten die Stromzuführungen ständig in Kontakt mit dem flüssigen Kältemittel befinden. Ein in FIG 4 in Normalstellung bzw. ohne Beschleunigung oder Schockeinwirkung gezeigter Kryostat 40 besteht aus einem inneren Behälter 42 und einem äußeren Behälter 43, welche beide aus Stahl gefertigt sind und beide jeweils einen Flansch 47 aufweisen. Beide Behälter 42,43 sind ineinander gesetzt, wobei der innere Behälter außen mit einer Wärmeisolationsfolie (Mylar) umwickelt ist. Zwischen den beiden Behältern 42,43 befindet sich ein Hohlraum 51, welcher mittels eines Ventils im äußeren Behälter abgepumpt werden kann, so dass ein Vakuum hoher Güte erzeugt wird. Über den jeweiligen Flansch 47 sind die beiden Behälter miteinander und mit einem Deckel 48 des Kryostaten 40 verbunden.

Durch den Innenbehälter 42 und den Deckel 48 wird ein Innenraum 59 des Kryostaten 40 begrenzt, in dem ein flüssiges Kältemittel ein Kryobad 45 für supraleitende Strombegrenzerelemente 44 ausbildet. Mit 49 ist der Pegel des Kryobades bei Normallage bzw. ohne Beschleunigung oder Schockeinwirkung auf den Kryostaten 40 bezeichnet. Zwischen dem Pegel 49 und dem Deckel 48 weist der Innenraum 59 gasförmiges Kältemittel 46 auf.

Stromzuführungen 52 sind von außerhalb des Kryostaten 40 durch den Deckel 48 in den Innenraum 59 zu den supraleitenden Strombegrenzerelementen 44 geführt. Die Stromzuführungen 52 können z.B. als Stromschienen (z. B. aus E-Kupfer oder Messing) ausgeführt sein.

Die Wärmeisolation des Kryostaten 40 hängt von der Güte des Vakuums, der Anzahl der Lagen an Isolationsfolie sowie der Wandstärke der Behälter 42, 43 ab. Um eine möglichst gute Wärmeeisolation zu erhalten, sollte die Wandstärke des Kryostaten 40 dünn sein und das Vakuum sehr gut - besser als 10⁻⁴ bar. Ein Prallblech (oder Blende) aus leitfähigem Material, fest mit der inneren Kryostatwand verbunden, würde einen negativen Effekt für die thermische Isolation haben, da an den Stellen der Anbindung an den Innenbehälter 42 eine erhöhte Wärmeleitfähigkeit auftreten würde, was insbesondere dann negativ wäre, wenn das flüssige Kältemittel 45 des Kryostaten in Berührung mit der Blende bzw. dem Prallblech kommen würde.

Bei Beschleunigung, Schockeinwirkung oder Neigung, insbesondere dauernder Neigung, und einer entsprechenden Änderung des Pegels 49 des flüssigen Kältemittels würden die Stromzuführungen 52 in ihrem untersten, d.h. dem supraleitenden Strombegrenzungselement 44 zugewandten Bereich nicht mehr in flüssiges Kältemittel 45 getaucht sein, d.h. es würden erhöhte ohmsche Verluste mit entsprechender Wärmeentwicklung auftreten, was zu einer erhöhten Verdampfung von flüssigem Kältemittel führen würde. Dies führt wiederum zu einer erhöhten notwendigen Kälteleistung eines Refrigerators, an dessen im Innenraum 59 des Kryostaten 40 angeordnetem Kaltkopf 58 verdampftes Kältemittel 46 rekondensiert wird. Weitere Gefahr ist, dass die nunmehr warmen Stromzuführungen 52 wegen ihrer guten thermischen Leitfähigkeit auch das HTS-Strombegrenzerelement 44 aufheizen, so dass im ungünstigsten Fall ein lokaler Quench auftreten könnte.

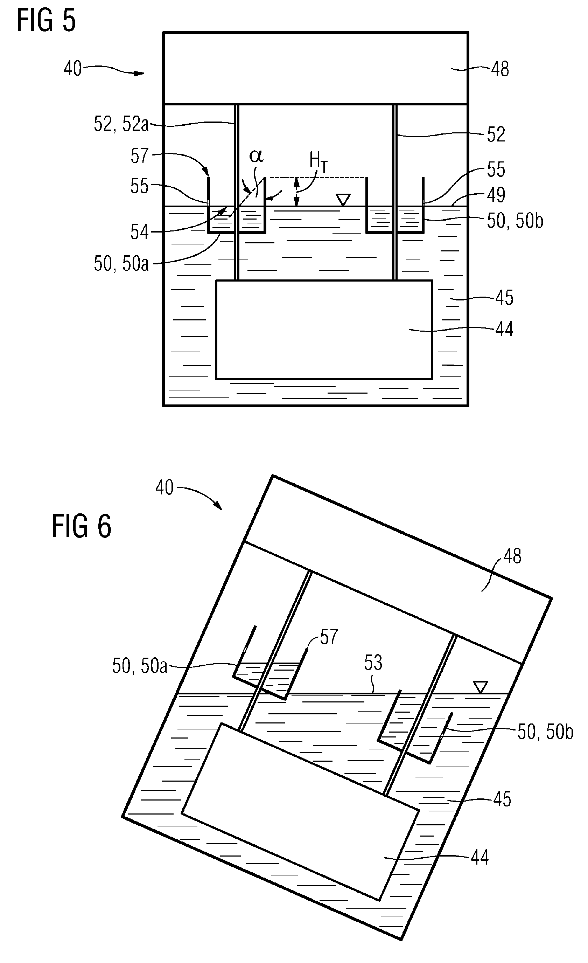

Vorteilhafterweise weisen deshalb die im Inneren des Kryostaten 40 verlaufenden Stromzuführungen 52 zu dem supraleitenden Strombegrenzer jeweils einen Topf 50 zur Aufnahme von flüssigem Kältemittel auf. Unter einem Topf wird hierbei jegliche Art von Gefäß oder Behälter verstanden, das zur Aufnahme einer Flüssigkeit geeignet ist. Wie vereinfacht und im Schnitt in FIG 5 dargestellt, ist bei Normallage des Kryostaten 40 der Boden und der untere Teil des Topfes 50 in das Kryobad 45 getaucht, während sich der Topfrand 57 und die Topföffnung oberhalb des Flüssigkeitspegels 49 des Kryobades 45 befinden. Die Stromzuführungsleitung 52 verläuft von dem Deckel 48 kommend entlang der Längsachse des Topfes und durch dessen Boden zu den supraleitenden Strombegrenzerelementen 44. Gemäß einer vorteilhaften Ausgestaltung der Erfindung weist die Stromzuführungsleitung 52 selbst Topfform auf, d.h. die Stromzuführungsleitung 52 ist topfartig ausgeformt.

Ein Flüssigkeitsaustausch eines Topfes 50 mit dem Kryobad 45 des Kryostaten 40 ist dadurch auf einfache Weise möglich, dass eine oder mehrere Öffnungen bzw. Bohrungen in einem Topf 50 vorgesehen werden. Bevorzugt handelt es sich, wie im Fall des Ausführungsbeispiels der FIG 5 und 6 gezeigt, um zumindest eine Bohrung 55, welche sich auf der der Kryostatinnenwand zugewandten Seite des Topfes 50 befindet.

Bei Normallage des Kryostaten befindet sich die Bohrung 55 bevorzugt knapp unterhalb des Flüssigkeitspegels 49, d.h. sie ist eingetaucht in das Kryobad 45 des Kryostaten 40. Über die Bohrung 55 ist somit ein Flüssigkeitsaustausch zwischen dem Kryobad 45 und dem Innenraum des Topfes 50 möglich.

Im Fall einer Schräglage des Kryostaten gemäß FIG 6 stellt sich der mit 53 bezeichnete Flüssigkeitspegel ein. Der rechte Stromzuführungstopf 50b taucht dann nahezu vollständig in das Kryobad 45 ein, während sich der linke Stromzuführungstopf 50a nahezu vollständig oberhalb des Flüssigkeitspegels 53 befindet. Wie ersichtlich verbleibt somit trotz abgesenktem Flüssigkeitspegel 53 im Topf 50a Kältemittel, um eine Kühlung der Stromzuführung 52a zu gewährleisten.

Die Höhe HT der Töpfe 50 an ihrer jeweiligen der Kryostatwand abgewandten Seite über dem Flüssigkeitspegel 49 bei Normallage des Kryostaten ist bevorzugt so gewählt, dass der Schnittpunkt des Pegels 54 des flüssigen Kältemittels mit der Stromzuführung 52 mit dem Topfrand 57 und mit dem Pegel 54 einen Winkel α bildet, welcher bevorzugt der maximal zu erwartenden Neigung des Kryostaten entspricht.

Das Volumen der Töpfe 50 sollte bevorzugt so bemessen sein, dass sich genügend flüssiges Kältemittel für die Dauer einer Schräglage in einem jeweiligen Topf 50 befindet.

Der in FIG 4 - 6 gezeigte Kryostat mit Stromzuführungen mit Kältemittel-Töpfen eignet sich somit insbesondere für den Einsatz in mobilen Einrichtungen. Besonders vorteilhaft ist die Verwendung in Über- und Unterwasserschiffen, da es bei Krängung und Neigung des Schiffes zu lange anhaltenden Schräglagen des Kryostaten kommen kann.

Die Deckel normaler Bad-Kryostate sind zwischen dem Inneren des Kryostaten (innerhalb des inneren Behälters) und der Umgebung nicht vakuumdicht. Wegen der Gefahr des Einkondensierens von Feuchtigkeit (mit der Folge einer Vereisung und u. U. Blockade einer Abgasleitung) oder Sauerstoff ( mit der Folge einer Ansammlung von LO₂) werden Standardkryostate im Betrieb bevorzugt auf leichtem Überdruck gegenüber der Umgebung gehalten. Ein Überdruckventil spricht an, wenn der Druck im Inneren des Kryostaten über das erlaubte Maß hinweg gehen sollte. Als zusätzliche Vorsichtsmaßnahme wird eine Platzmembrane vorgesehen.

Der Druck im Kryostaten bestimmt die Badtemperatur des flüssigen Kältemittels und damit die supraleitenden Eigenschaften des Supraleiters. Der maximale Dampfdruck des flüssigen Kältemittels im Kryostat ist im Fall von flüssigen Stickstoff deswegen auf ca. 1.5 bar (besser 1.1 bar) begrenzt. In außenluftunabhängigen Räumen (wie sie z. B. in einem Unterwasserschiff vorliegen) kann der Luftdruck im Rauminneren 600...1400mbarbetragen und ist nicht von der relativen Konstanz wie auf der Erdoberfläche. Unter bestimmten Umständen könnte der Umgebungsdruck vermutlich deutlich über 1 bar liegen. Da der Deckel mit seinen Durchführungen nur schwierig vakuumdicht ausgeführt werden kann, würden gegebenenfalls Bestandteile der Umgebungsluft wegen der Druckdifferenz nach innen fliehen und dort ausfrieren, bis der Druck ausgeglichen ist.

Eine erste Abhilfemöglichkeiten besteht darin, den Kryostatdeckel vakuumdicht auszuführen. Diese Lösung ist allerdings sehr aufwendig (Abblaseventil und Füllvorrichtung für das flüssige Kältemittel notwendig, alle Durchführungen müssen vergossen oder mit vakuumdichten Elementen aufgebaut werden) und schwierig zu überprüfen.

Eine weitere Abhilfemöglichkeit besteht darin, den Kryostat in einem gasdichten Druckbehälter anzuordnen. Der Zwischenraum zwischen der Innenwand des Druckbehälters und der Außenwand des Kryostaten kann dann mit gasförmigem Kältemittel gefüllt und auf Überdruck gegenüber seiner Umgebung gehalten werden (z.B. mit Hilfe einer Druckgasflasche). Im Falle eines Kryostatlecks dringt sauberes, gasförmiges Kältemittel in den Kryostat ein, wird kondensiert und der Pegel des flüssigen Kältemittels im Kryostat steigt langsam an. Bei Überschreiten einer Max-Schwelle ist ein Wartungseingriff (z.B. flüssigen Stickstoff ablassen) nötig. Der Bedarf an gasförmigem Kältemittel in dem Zwischenraum hängt von der Dichtigkeit des äußeren Behälters des Kryostaten ab. Ein weiterer Vorteil dieser Lösung ist, dass die Stromzuführungen am Kryostaten nicht vereisen können.

Alternativ kann der Zwischenraum z.B. mit Hilfe einer (einfachen) Pumpe auf einem Druck knapp unterhalb des Druckes im Innenraum des Kryostaten gehalten werden. Im Falle eines Lecks sinkt der Pegel des flüssigen Kältemittels im Kryostat langsam ab. Bei Unterschreiten einer Min-Schwelle ist ein Wartungseingriff (z.B. flüssiges Kältemittel nachfüllen) nötig.

Da bei einem Kryostat insbesondere im Bereich des einen Zugriff in den Innenraum des Kryostaten erlaubenden Deckel die Wahrscheinlichkeit für ein Leck am größten ist, kann es ausreichend sein, besondere Maßnahmen nur im Bereich dieses Deckels zu treffen. An der Außenwand des Kryostaten kann hierzu im Bereich dieses Deckels ein gasdichtes und druckfestes Wandelement angeordnet werden, so dass zwischen der Außenwand des Kryostaten und dem Wandelement ein gasbefüllbarer Druckraum ausgebildet wird. Der Druckraum kann entweder mit Luft gefüllt auf Unterdruck gegenüber dem Innenraum des Kryostaten gehalten oder mit gasförmigem Stickstoff gefüllt auf Überdruck gegenüber dem Innenraum des Kryostaten gehalten werden. In beiden Fällen wird, wie bereits vorstehend erläutert, ein Eindringen von Umgebungsluft in den Kryostaten bei einem Leck des Kryostaten im Bereich des Deckels verhindert und es besteht die Möglichkeit, dieses Leck zu erkennen.

Die Figur 7 zeigt eine Außenansicht eines Kryostaten 60 zur Kühlung eines HTS-Strombegrenzers mit einem im Bereich eines Deckels 67 an der Außenwand des Kryostaten angeordnetem gasdichten und druckfesten Wandelement 61. Durch die Außenwand des Kryostaten 60 im Bereich des Deckels 67 und das Wandelement 61 wird ein gasbefüllbarer Druckraum 69 ausgebildet. Das Wandelement 61 weist vorteilhafter Weise eine Glockenform und deshalb besonders hohe Druckfestigkeit auf. Bevorzugtes Material des Wandelementes 61 ist Kunststoff, da er nicht leitend ist.

Das Wandelement 61 oder der Druckbehälter können mit Wasserabtropfrinnen versehen werden, so dass auskondensiertes Wasser gezielt abfließen kann. Wasserdampf kondensiert an der kältesten Stelle in Abhängigkeit der Wasserdampfdruckkurve (Kondensation in Abhängigkeit der Luftfeuchte und der Temperatur am Ort der Kondensatoroberfläche). Das Wandelement 61 oder der Druckbehälter sind bevorzugt daher so zu konstruieren, dass eine Stelle gezielt kühler gehalten ist, als der Rest der Oberfläche.

Das Wandelement 61 weist Durchführungen 62 für Stromzuführungen 63 zu dem in dem Kryostaten angeordneten supraleitenden Strombegrenzer, für eine flexible Druckleitung 65 für die Zuführung von Helium von einem Kompressor 64 zu einem Kaltkopf 68 des Kryostaten sowie für die Zufuhr von Stickstoff aus einer Druckgasflasche 66 auf. Über die Druckgasflasche 66 wird der Druckraum 69 auf Überdruck gegenüber dem Innenraum 70 des Kryostaten 60 gehalten. Im Falle eines Lecks des Kryostatdeckels 67 dringt sauberer gasförmiger Stickstoff von dem Druckraum 69 in den Innenraum 70 des Kryostaten 60 ein, wird kondensiert und der Pegel des flüssigen Stickstoff im Innenraum 70 des Kryostaten 60 steigt langsam an. Mit Hilfe einer geeigneten Sensorik kann bei Überschreiten einer Max-Schwelle die Notwendigkeit eines Wartungs- oder Reparatureingriffes (z.B. flüssigen Stickstoff ablassen) signalisiert werden.

Die Anwendung dieses Prinzips bezieht sich ebenfalls auf andere kryogene Einrichtungen, wie Speicherbehälter für kryogen gelagerte Medien (Sauerstoff, Erdgas, Wasserstoff, Stickstoff) wie auch supraleitende Bauteile, welche ein kryogenes Kältemittel wie vorgenannt benötigen und unter geringerem Druck als Umgebungsdruck arbeiten sollen, wie z. B. supraleitende Transformatoren, Drosseln, Thermosyphone.

## Patentansprüche

1. Kühleinrichtung (1) für einen Supraleiter (4), mit einem Kryostaten (10) mit einem Innenraum (15), in dem ein Kältemittel mit niedriger, insbesondere kryogener Temperatur, z.B. von 77K, ein Kryobad (5) für den Supraleiter (4) ausbildet,
**gekennzeichnet durch** eine Aufnahmevorrichtung (11) zur Halterung des Kryostaten (10) und zumindest ein den Kryostaten (10) und die Aufnahmevorrichtung (11) verbindendes Halterungselement (19), wobei das zumindest eine Halterungselement (19) ein eine Bewegungsübertragung von der Aufnahmevorrichtung (11) auf den Kryostaten (10) dämpfendes Element (18) umfasst.

2. Kühleinrichtung (1) nach Anspruch 1,
**dadurch gekennzeichnet, dass** ein Gummidämpfer als dämpfendes Element (18) vorgesehen ist.

3. Kühleinrichtung (1) nach Anspruch 1,
**dadurch gekennzeichnet, dass** ein Federelement als dämpfendes Element (18) vorgesehen ist.

4. Kühleinrichtung (1) nach einem der vorhergehenden Ansprüche, **dadurch gekennzeichnet, dass** Stromzuführungen (13) zu dem Kryostaten (10) bewegungsflexibel ausgeführt sind oder Bewegungskompensatoren (8) aufweisen.

5. Kühleinrichtung (1) nach Anspruch 1,
**dadurch gekennzeichnet, dass** der Kryostat (10) einen Außenbehälter (3) und einen den Innenraum (15) begrenzenden und in dem Außenbehälter (3) angeordneten Innenbehälter (2) aufweist, wobei der Innenbehälter (2) aus einem nichtleitendem Material, insbesondere einem glasfaserverstärktem Kunststoff, besteht.

6. Kühleinrichtung (1) nach Anspruch 1,
**dadurch gekennzeichnet, dass** der Kryostat (10) einen den Innenraum (15) begrenzenden Innenbehälter (2) aus einem leitenden Material, insbesondere einem amagnetischem Stahl und ein zwischen dem Innenbehälter (2) und dem Supraleiter (4) angeordnetes Trennelement (12) aus einem nichtleitenden Material, insbesondere einem glasfaserverstärktem Kunststoff, aufweist.

7. Kühleinrichtung (1) nach Anspruch 5 oder 6,
**dadurch gekennzeichnet, dass** der Außenbehälter (3) aus einem amagnetischem Stahl besteht.

8. Kühleinrichtung (1) nach Anspruch 6,
**dadurch gekennzeichnet, dass** der Supraleiter (4) über Abstandshalter an dem Trennelement (12) abgestützt ist.

9. Kühleinrichtung (1) für einen Supraleiter (24), mit einem Kryostaten (20) mit einem Innenraum, in dem ein Kältemittel mit niedriger, insbesondere kryogener Temperatur, z.B. von 77K, ein Kryobad (23) für den Supraleiter (24) ausbildet, insbesondere nach einem der vorhergehenden Ansprüche,
**dadurch gekennzeichnet, dass** bei einer Normallage des Kryostaten (20) das Kryobad (23) eine größere Höhe (H) als Breite (B) aufweist.

10. Kühleinrichtung (1) für einen Supraleiter (24), mit einem Kryostaten (30) mit einem Innenraum (31), in dem ein Kältemittel mit niedriger, insbesondere kryogener Temperatur, z.B. von 77K, ein Kryobad (23) für den Supraleiter (24) ausbildet, insbesondere nach einem der vorhergehenden Ansprüche,
**dadurch gekennzeichnet, dass** der Kryostat (30) zumindest ein Prallelement (27a, 27b bzw. 27) aufweist, das verhindert, dass bei Schockbelastung des Kryostaten oder Neigung des Kryostaten aus seiner Normallage das Kryobad (23) seine Lage derart verändert, dass sich der Supraleiter (24) außerhalb des Kryobades (23) befindet.

11. Kühleinrichtung (1) nach Anspruch 10,
**dadurch gekennzeichnet, dass** das zumindest eine Prallelement (27a, 27b bzw. 27) oberhalb des Flüssigkeitspegels (25) des Kryobades (23) angeordnet ist und von einer den Innenraum (31) seitlich begrenzenden Innenwand (21a,21b) in Richtung Mitte des Innenraums (31) verläuft.

12. Kühleinrichtung (1) nach Anspruch 11,
**dadurch gekennzeichnet, dass** das zumindest eine Prallelement (27a, 27b bzw. 27) in seinem Verlauf von der Innenwand (21a, 21b) zu der Mitte des Innenraumes (31) einen zu dem Flüssigkeitspegel (25) abnehmenden Abstand aufweist.

13. Kühleinrichtung (1) nach einem der Ansprüche 11 oder 12, **dadurch gekennzeichnet, dass** das zumindest eine Prallelement (27) bis zu einer bezüglich des Innenraumes (27) gegenüberliegenden Innenwand verläuft und somit den Innenraum (31) in einen unteren, im wesentlichen flüssiges Kältemittel aufweisenden Teil (31a) und einen oberen, nur mit gasförmigem Kältemittel gefüllten Teil (31b) trennt, wobei das Prallelement (27) zumindest eine im wesentlichen in der Mitte des Innenraumes angeordnetes Durchgangsloch (28) für einen Gas- und Flüssigkeitsaustausch zwischen dem unteren Teil (31a) und dem oberen Teil (31b) aufweist.

14. Kühleinrichtung (1) nach Anspruch 13,
**dadurch gekennzeichnet, dass** in Normallage des Kryostaten (30) der Rand des Durchgangsloches (28) den geringsten Abstand des Prallelementes (27) zu dem Flüssigkeitspegel (25) des Kryobades (23) aufweist.

15. Kühleinrichtung (1) nach einem der Ansprüche 10 bis 14, **dadurch gekennzeichnet, dass** das zumindest eine Prallelement (27a, 27b, 27) aus einem Material mit gleichzeitig geringer elektrischer und thermischer Leitfähigkeit besteht.

16. Kühleinrichtung (1) nach einem der vorhergehenden Ansprüche, **dadurch gekennzeichnet, dass** im Inneren des Kryostaten (40) verlaufende Stromzuführungen (52) zu dem Supraleiter (44) jeweils einen Topf zur Aufnahme von flüssigem Kältemittel aufweisen.

17. Kühleinrichtung (1) für einen Supraleiter, mit einem Kryostaten mit einem Innenraum, in dem ein Kältemittel mit niedriger, insbesondere kryogener Temperatur, z.B. von 77K, ein Kryobad für den Supraleiter ausbildet, insbesondere nach einem der vorhergehenden Ansprüche,
**dadurch gekennzeichnet, dass** der Kryostat in einem gasdichten Druckbehälter angeordnet ist.

18. Kühleinrichtung (1) für einen Supraleiter, mit einem Kryostaten (60) mit einem Innenraum (70), in dem ein Kältemittel mit niedriger, insbesondere kryogener Temperatur, z.B. von 77K, ein Kryobad für den Supraleiter ausbildet, insbesondere nach einem der vorhergehenden Ansprüche,
**dadurch gekennzeichnet, dass** an einer Außenwand (67) des Kryostaten (60) ein druckfestes und gasdichtes Wandelement (61) derart angeordnet ist, dass zwischen der Außenwand des Kryostaten (60) und dem Wandelement (61) ein gasbefüllbarer Druckraum (69) ausgebildet wird.

19. Kühleinrichtung (1) nach Anspruch 18,
**dadurch gekennzeichnet, dass** das Wandelement (61) im Bereich eines einen Zugriff in den Innenraum (70) des Kryostaten (60) erlaubenden Deckels (67) angeordnet ist.

20. Kühleinrichtung (1) nach Anspruch 18 oder 19,
**dadurch gekennzeichnet, dass** das Wandelement (61) eine Glockenform aufweist.

21. Kühleinrichtung (1) nach einem der Ansprüche 17 bis 20
**dadurch gekennzeichnet, dass** das Wandelement (61) oder der Druckbehälter aus einem nichtleitenden Material, insbesondere einem Kunststoff, bestehen.

22. Kühleinrichtung (1) nach einem der Ansprüche 17 bis 21
**dadurch gekennzeichnet, dass** das Wandelement (61) oder der Druckbehälter eine Stelle mit im Vergleich zur restlichen Oberfläche geringerer Temperatur aufweist.

23. Kühleinrichtung (1) nach einem der Ansprüche 17 bis 22
**dadurch gekennzeichnet, dass** das Wandelement oder der Druckbehälter Wasserabtropfrinnen aufweist.

24. Kühleinrichtung (1) nach Anspruch 1
**dadurch gekennzeichnet, dass** die Aufnahmevorrichtung (11) Teil einer mobilen Einrichtung, insbesondere eines Über- oder Unterwasserfahrzeuges ist.

25. Kühleinrichtung (1) nach Anspruch 1
**dadurch gekennzeichnet, dass** die Aufnahmevorrichtung (11) Teil einer elektrischen Maschine oder eines elektrischen Apparates ist.

26. Elektrische Einrichtung wie elektrischer Apparat oder elektrischen Maschine mit einem supraleitenden Strombegrenzer (4) und/oder supraleitenden Wicklungen und mit einem Kryostaten (10), in dessen Innenraum (15) ein Kältemittel mit niedriger, insbesondere kryogener Temperatur, z.B. von 77K, ein Kryobad (5) für den supraleitenden Strombegrenzer (4) und/oder die supraleitenden Wicklungen ausbildet, mit einer Kühleinrichtung (1) für den supraleitenden Strombegrenzer (4) und/oder supraleitende Wicklungen nach einem der Ansprüche 1 bis 25.

27. Aufnahmevorrichtung (11) für einen Kryostaten (10) in dessen Innenraum (15) ein Kältemittel mit niedriger, insbesondere kryogener Temperatur, z.B. von 77K, ein Kryobad (5) für einen Supraleiter (4) ausbildet, mit zumindest einem Halterungselement (19) zur Halterung des Kryostaten (10), wobei das zumindest eine Halterungselement (19) ein eine Bewegungsübertragung von der Aufnahmevorrichtung (11) auf den Kryostaten (10) dämpfendes Element (18) umfasst.

28. Kryostat (10) zum Einbau in eine Aufnahmevorrichtung (11) einer Kühleinrichtung nach Anspruch 1 mittels zumindest einem die Aufnahmevorrichtung (11) und den Kryostaten (10) verbindenden Halterungselement (19), wobei der Kryostat (10) und das zumindest eine Halterungselement (19) im Sinne einer Vormontage-Einheit zusammengefügt sind.
